# EUROPÄISCHE PATENTSCHRIFT

(11) **EP 1 187 178 B1**
(45) Veröffentlichungstag und Bekanntmachung des Hinweises auf die Patenterteilung: **21.11.2007**
(21) Anmeldenummer: 01000428.1
(22) Anmeldetag: 06.09.2001
(51) Int. Cl.: H01J 61/86, H01J 61/32, H01J 61/12, F21V 8/00, F21S 8/10

(54) **Gasentladungslampe und Beleuchtungssystem**
Gas discharge lamp and lighting system
Lampe a décharge gazeuse et système d'éclairage

(30) Priorität: 08.09.2000 DE 10044683
(43) Veröffentlichungstag der Anmeldung: 13.03.2002
(73) Patentinhaber: Philips Intellectual Property & Standards GmbH, 20099 Hamburg (DE); Koninklijke Philips Electronics N.V., 5621 BA Eindhoven (NL)
(72) Erfinder: Schöller, Klaus, c/o Philips C.I.P. GmbH, 52064, Aachen (DE); Tiesler-Wittig, Helmut, c/o Philips C.I.P. GmbH, 52064, Aachen (DE)
(74) Vertreter: Volmer, Georg

(56) Entgegenhaltungen:
- EP-A- 0 367 032
- EP-A- 0 416 937
- EP-A- 0 562 872
- WO-A-00/05746
- WO-A-00/46836
- US-A- 4 161 672

## Beschreibung

Die Erfindung betrifft eine Gasentladungslampe, insbesondere eine Hochdruck-Entladungslampe für Anwendungen im Automobilbereich. Weiterhin betrifft die Erfindung noch ein Beleuchtungssystem mit wenigstens einer Lichtquelle, wenigstens einem Lichteinkoppelungssystem, wenigstens einem Lichtleiter und wenigstens einem Lichtauskoppelungssystem.

Solche Beleuchtungssysteme mit einer zentralen Lichtquelle und einer Verteilung des Lichtes über Lichtleiter (d h. geeignete faseroptische Systeme) an entfernte Stellen eignen sich insbesondere für Anwendungen im Automobilbereich. Darüber hinaus kann auch Licht an schlecht zugänglichen Orten oder Orten, an denen eine direkte Lichterzeugung aus anderen Gründen nicht oder schlecht möglich ist (zB. in einem Behälter mit explosiver Füllung) erzeugt weiden. Die zentrale Lichtquelle muss dabei Eigenschaften besitzen, die von bekannten Lampen nicht erreicht werden. Dazu gehören beispielsweise das Anlaufverhalten beim Einschalten, die effektive Helligkeit der Lampe und die Bogenstabilität der Gasentladung. Weiterhin erlaubt ein solches System (Remote Lighting System, RLS) eine flexible Verteilung über Lichtleiter und den Verzicht auf Lichtquellen, so dass Platz gespart und Fehlerquellen vermieden werden. Dazu kommt eine weitgehende Freiheit bei der Gestaltung der Beleuchtungsvorrichtung am Ort des Lichtaustritts (Lichtauskoppelungssystem wie zum Beispiel ein Autofrontscheinwerfer). An einer gut zugänglichen und geschützten Stelle kann im Auto eine zentrale Lichtquelle angeordnet sein, deren Licht über störsichere Lichtleiter zu den Frontscheinwerfern gelangt. Die damit geschaffene Designfreiheit für die Scheinwerfer wird insbesondere im Automobilbereich gefordert.

Gattungsgemäße Gasentladungslampen sind auch aus der europäischen Patentschrift EP 0 562 872 bekannt. Darin ist eine Entladungs-Lichtquelle offenbart, die eine hohe Helligkeit mit ausreichender Konvektionsstabilität des Bogens der Gasentladung verbindet.

Die Helligkeit der Lampe, genauer Lumineszenz, wird vorteilhafterweise als effektive Lumineszenz in Bogenlumineszenz pro Bogenabstand² (lm/cm²) angegeben Die Bogenentladungs-Lichtquelle besitzt ein Entladungsrohr mit einer darin ausgebildeten Bogenkammer, die eine Gasfüllung enthält, die durch Energiezufuhr in einen Entladungszustand gebracht werden kann. Mindestens zwei Elektroden ragen in die Bogenkammer hinein und haben einen Bogenabstand von 2 bis 3,5 mm. Die in der Bogenkammer enthaltene Quecksilbermenge und verschiedene Abmessungen des Entladungsrohres werden so gewählt, dass ein Kompromiss zwischen den drei Abhängigkeiten Betriebsspannung, welche die Lampeneffizienz bestimmt, Konvektionsstabilität und strukturelle Integrität der Entladungslampe entsteht. Es wird ein Bereich für einen Füllungs-Dichtewert angegeben, bei dem auch eine hinreichende strukturelle Integrität des Bogenrohres gegeben ist. Damit das Bogenrohr im Betrieb der Lampe unversehrt bleibt, muss die Zugspannung des Bogenrohres unterhalb eines maximalen Wertes sein, der von den Materialeigenschaften und den Abmessungen des Bogenrohres bestimmt wird. Ein Kompromiss zwischen Bogenabstand, Bogenkammerdurchmesser, Wandstärke und der Quecksilberdichte der Lampe ermöglicht eine Lampe, die eine Lichtmenge in der Größenordnung von 50000 lm/cm² erzeugt.

Bekannte Gasentladungslampen, wie u.a. in EP 0 562 872 offenbart, haben den Nachteil, dass eine hohe Helligkeit erst nach einer Anlaufzeit der Lampe zur Verfügung steht. Dies ist insbesondere für Anwendungen im Automobilbereich ein unannehmbarer Mangel, da diese Zeit beispielsweise außerhalb der gesetzlichen Anforderungen an einen Frontscheinwerfer liegt. An das Anlaufverhalten eines Frontscheinwerfers wird die Bedingung gestellt, dass zu bestimmten Zeitpunkten nach dem Einschalten eine vorgegebene Lichtmenge erzeugt wird.

EP-A-0901151 zeigt eine Hochdruck-Quecksilberdampflampe mit ellipsoidem Entladungsgefäß, in dem Quecksilber mit einer Fülldichte von 100-350 mg/cc enthalten ist. Der Quecksilber-Dampfdruck im Betrieb liegt bei 10-35 MPa, so dass ein gewünschtes Spektrum erreicht wird.

EP-A-0973187 beschreibt eine Hochdruck-Quecksilberdampflampe mit ellipsoidem Entladungsgefäß, in dem Elektroden asymetrisch im Abstand von 1-2mm voneinander angeordnet sind. In dem Gefäß ist Quecksilber mit einer Fülldichte von mindestens 150 mg/cc enthalten.

In US-A-5497049 ist eine Hochdruck-Quecksilberdampflampe mit sphäroidalem Entladungsgefäß gezeigt. Die Quecksilber-Fülldichte beträgt mindestens 200 mg/cc.

Die Aufgabe der Erfindung ist es, eine Gasentladungslampe mit hoher Helligkeit zu schaffen, die eine ausreichende Helligkeit nach kurzer Zeit zur Verfügung stellt, so dass insbesondere Anforderungen aus dem Automobilbereich an eine Frontbeleuchtung erfüllt werden.

Die Aufgabe wird gelöst durch eine Gasentladungslampe mit einem Kolben aus Quarzglas, der in einer mittleren Position eine ellipsoidförmige Entladungskammer aufweist, die eine Oberfläche mit einem Höchstwert von weniger als 2,5 cm² besitzt, mit zwei sich in die Entladungsi kammer erstreckenden Elektroden, die in der Entladungskammer einen Elektrodenabstand Eₐ von 1,5 mm bis 3,0 mm besitzen, mit einer Füllung in der Entladungskammer, die beim Betrieb der Lampe in einem Gasentladungszustand ist und eine Füllungsdichte von 80 bis 90 mg/cm³ besitzt, mit wenigstens einem Quecksilberanteil an der Füllung, der die Füllungsdichte bestimmt und mit einer Brennspannung zwischen den Elektroden in der Entladungskammer beim Betrieb der Lampe von 80 bis 90 V. Die erfindungsgemäße Lampe ist zum Betrieb bei einer Leistung von 50-70 W vorgesehen. Eine Gasentladungslampe mit den Eigenschaften gemäß Anspruch 1 überwindet die aus dem Stand der Technik bekannten Nachteile und liefert insbesondere nach dem Einschalten innerhalb kürzerer Zeit eine größere Lichtmenge. Erst dadurch kann die Lampe neben anderen Beleuchtungsvorrichtungen im Automobilbereich auch zur Realisierung der Funktion eines Frontscheinwerfers verwendet werden. Neben anderen reglementierten Anforderungen an Beleuchtungseinrichtungen für Fahrzeuge, wie beispielsweise eine festgelegte Lichtmenge, Helligkeit, Farbtemperatur und Lebensdauer für Frontscheinwerfer, ist auch ein bestimmtes Zünd- und Anlaufverhalten der Frontscheinwerfer zwingend. Nach dem Einschalten müssen mindestens 80% des Lichtes nach 4s zur Verfügung stehen. Diese Eigenschaft wird erst mit der erfindungsgemäßen Gasentladungslampe erreicht. Die kleine Entladungskammer ermöglicht im Zusammenhang mit der Füllungsdichte und Brennspannung eine effiziente Gasentladung mit einer hohen Lichtmenge. Es entsteht ein sehr hohen Lichtstrom pro Länge des Bogenabstandes zum Quadrat von etwa 90000 lm/cm². Außerdem steht bereits nach 4s mindestens 80% des Lichtes zur Verfügung. Daher eignet sich eine solche Gasentladungslampe besonders als Lichtquelle für ein System mit einer zentralen Lichtquelle und Verteilung mittels Lichtleitern im Fahrzeug. Natürlich ist es neben der Frontscheinwerferfunktion auch möglich, weitere Beleuchtungsfunktionen damit zu realisieren. Zusätzliche Lichtleiter können zum Beispiel verwendet werden, um eine Innenraum- oder Displaybeleuchtung zu ermöglichen. Die Einkoppelung erfolgt an der zentralen Lichtquelle, während die Art und Form der Auskoppelung aus dem Licht-leiter am entfernten Ort jeweils an die entsprechenden Anforderungen angepasst werden kann.

Bei einer Weiterbildung der GasentladungsLampe besitzt die Entladungskammer in Querrichtung des Kolbens einen Innendurchmesser von weniger als 4 mm. Es hat sich gezeigt, dass die Lampe besonders gute Eigenschaften aufweist, wenn der Innendurchmesser der Entladungskammer in einem Bereich von 3 bis 4 mm, insbesondere bei 3,7 mm, liegt. In einer vorteilhaften Fortbildung besitzt die Entladungskammer einen Wandladungsfaktor auf der Oberfläche der Entladungskammer von mindestens 25 W/cm². Der Wandladungsfaktor beschreibt die Leistung der Gasentladungslampe pro Oberfläche der Entladungskammer. Der Wandladungsfaktor ist daher ein Parameter für die Belastung des Materials der Entladungskammer, und damit für die Lebensdauer der Lampe. Der gegenüber dem bekannten Stand der Technik erhöhte Wert des Wandladungsfaktors wird aufgrund der kleineren Entladungskammer ermöglicht. Dadurch wird im kleinen Volumen der Entladungskammer deutlich mehr Licht erzeugt.

Eine Ausgestaltung der Erfindung betrifft besonders geeignete Abmessungen der Entladungskammer, die vorzugsweise eine Breite von weniger als 8 mm und eine Länge von weniger als 8 mm besitzt. Damit ist die Entladungskammer deutlich kleiner als bei bekannten Lampen. Es ist vorteilhaft für die Entladungskammer eine Breite im Bereich von 6 bis 7,7 mm, insbesondere 7,6 mm, vorzusehen, die mit einer Länge im Bereich von 6 bis 8 mm, insbesondere 7,4 mm, kombiniert wird.

In einer bevorzugten Weiterbildung der erfindungsgemäßen Lampe enthält die Füllung der Entladungskammer wenigstens Quecksilber und ein Edelgas, vorzugsweise Xenon. In an sich bekannter Weise wird auch bei einer Lampe nach der Erfindung mittels eine Füllung aus Quecksilber und Edelgas ein besseres Zündverhalten des Füllgases erreicht. Vorteilhafterweise enthält die Füllung der Entladungskammer noch einen Anteil aus mindestens einem Metallhalogenid, durch den insbesondere die Farbtemperatur des Lichtes für einen Frontscheinwerfer im Auto eingestellt werden kann.

Ein Betrieb der Lampe mit einer Leistung im Bereich 50 bis 70 W bietet den Vorteil, auf vorhandene elektronische Vorschaltgeräte (EVG) zurückgreifen zu können. Damit wird ein Wert von 90 bis 100 lm/W für die Effizienz der erfindungsgemäßen Gasentladungslampe erreicht.

Bei einer weiteren Ausgestaltung besitzt die Lampe einen Wert für die Grashofzahl Gr dividiert durch eine Proportionalitätskonstante C von weniger als 500 mg²/cm³. Wie aus dem Stand der Technik bekannt ist, ist die Grashof-Zahl Gr ein Parameter für die Konvektionsstabilität. Sie ist abhängig vom Innendurchmesser der Entladungskammer und von der Füllungsdichte der Komponenten der Füllung in der Entladungskammer. Zur Bestimmung des Wertes wird ein Proportionalitätsfaktor C eingeführt. Je kleiner der Wert für Gr/C ist, desto stabiler ist die Gasentladungslampe gegenüber Konvektion in der Entladungskammer. Eine solche Lampe mit einem Wert von unter 500 mg²/cm³ für Gr/C ist daher auffallend stabil gegen Konvektion. Dies kann insbesondere mittels eines kleinen Innendurchmessers erreicht werden.

Weiterhin wird die Aufgabe noch durch eine Beleuchtungssystem mit einer solchen Gasentladungslampe als Lichtquelle gelöst.

Im folgenden soll die Erfindung anhand eines Ausführungsbeispiels näher erläutert werden. Dabei zeigen:
- Figur 1:: eine erfindungsgemäße Gasentladungslampe und
- Figur 2:: ein Beleuchtungssystem mit einer Gasentladungslampe.

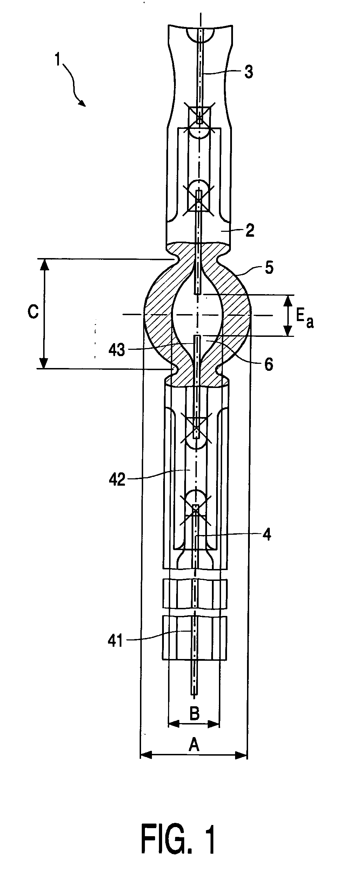

In der Figur 1 ist eine Gasentladungslampe 1 dargestellt, die einen rohrförmigen Kolben 2 aus Quarzglas und zwei gegenüberliegende Elektroden 3 und 4 besitzt. Der Kolben 2 hat eine Länge im Bereich von 50 bis 110 mm. Ungefähr in der Mitte des Kolbens 2 ist eine Entladungskammer 5 angeordnet. Die Entladungskammer 5 wird von zwei Quetschungen im Kolben 2 vakuumdicht abgeschlossen.

Die Elektrode 4 besteht aus einer Außenelektrode 41 zur äußeren Kontaktierung einer Molybdänfolie 42 und einer Innenelektrode 43. Die zweite Elektrode 3 ist in entsprechender Weise aufgebaut. Die Molybdänfolie 42 verbindet die Außenelektrode 41 mit der Innenelektrode 43 im Bereich einer Quetschung des Kolbens 2. Die Innenelektroden 43 erstreckt sich in die Entladungskammer 5 hinein und hat dort einen Elektrodenabstand Eₐ von 2,3 mm von der anderen Innenelektrode. Die Erfindung ist jedoch nicht auf das dargestellte Ausführungsbeispiel mit einem zweiseitig gequetschten Kolben 2 beschränkt, sondern kann ebenso mit einem einseitig gequetschten Kolben ausgeführt sein. Die Entladungskammer 5, die einen Entladungsraum 6 mit einem mit B bezeichneten Durchmesser von 3,7 mm umschließt, hat eine mit A bezeichnete Breite von 7,6 mm und eine mit C bezeichnete Länge von 7,4 mm. Damit entsteht eine relativ kleiner Entladungsraum 6 mit einer Oberfläche von etwa 2,0 cm². Im Entladungsraum 6 befindet sich eine Füllung, die aus Quecksilber, Xenon und Metallhalogenid besteht. Im Betriebszustand der Lampe 1 sorgt die an die Außenelektroden angelegte Spannung für eine Brennspannung zwischen den Innenelektroden von etwa 85 V. Durch die Anregung ist die Füllung in einem gasförmigen Entladungszustand und erzeugt bei einer Leistung von 50 W etwa 4800 lm.

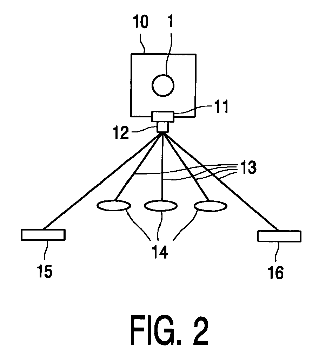

Die Figur 2 zeigt ein Beleuchtungssystem mit einer GasentladungsLampe 1 als zentraler Lichtquelle, die in einem Lichteinkoppdungssystem 10 angeordnet ist. Das bekannte System 10 wird nur knapp beschrieben. Es umfasst ein Gehäuse mit einem Reflektor oder ähnlicher Abbildungseinheit, in dem die Lampe 1 austauschbar angeordnet ist. Der Reflektor fokussiert das von der Lampe 1 erzeugte Licht auf eine Einkoppelungsöffnung 11. Das Lichteinkoppelungssystem 10 kann auch mit einem Ventilator oder einer anderen geeigneten Vorrichtung zur Wärmeregulierung versehen sein. Im Ausführungsbeispiel ist weiterhin ein Lichtmischer 12 vor der Einkoppelungsöffnung 11 angebracht, der aus einem 30 - 60 mm langen Quarzglasstab besteht. Der Lichtmischer 12 erzeugt eine homogene Lichtverteilung am Ende, so dass das Verhältnis der austretenden Lichtmenge pro mit dem Lichtmischer verbundenem Lichtleiter 13 durch den Querschnitt und die Länge des jeweiligen Lichtleiters 13 bestimmt ist. Wenn kein Lichtmischer 12 vorgesehen wird, um Platz zu sparen und mögliche Lichtverluste zu vermeiden, wird das vom Einkoppelungssystem 10 erzeugte Licht derart auf die einzelnen Lichtleiter 13 verteilt, wie es an der Einkoppelungsöffnung 11 austritt.

An den Lichtmischer 12 sind mehrere Lichtleiter 13 angeschlossen, die mit Lichtauskoppelungssystemen 14, 15, 16 verbunden sind Neben zwei Frontscheinwerfen 15 und 16 können verschiedene weitere Beleuchtungsvordchtungen 14 des Autos, z B. Innenraumbeleuchtung, Rücklichter und andere Signallampen, verbunden werden. Die Anzahl und Art der Beleuchtungswrdchtungm ist abhängig von der erzeugten Lichtmenge des vermendeten Einkoppelungssystems 10, d. h. von der Lampe 1, der Effizienz des Reflektors und dem Querschnitt der Einkoppelungsöffnung 11, und von der Effizienz der Lichtleiter 13, d. h insbesondere der Materialqualität, dem Querschnitt und der Länge. Durch Verbesserung der Reflektoreigenschaften sowie durch eine große Einkoppelungsöffnung 11 kann das Beleuchtungssystem noch optimiert werden. Außerdem ist auch die Installation von mehr als einem solchen System in einem Kraftfahrzeug denkbar. Die Eigenschaften des Lichtes an einer Beleuchtungsvorrichtung 14 können mittels entsprechender Lichtleiter 13 (Reduktion der Lichtstärke durch Dämpfung) oder Farbscheiben (Einstellung einer bestimmten Farbe) an die jeweilige Beleuchtungswrdchtung angepasst werden.

## Patentansprüche

1. Gasentladungslampe (1)
- mit einem Kolben (2) aus Quarzglas, der in einer mittleren Position eine ellipsoidförmige Entladungskammer (5) aufweist, die eine Oberfläche mit einem Höchstwert von weniger als 2,5 cm² besitzt,
- mit zwei sich in die Entladungskammer (5) erstreckenden Elektroden (3, 4), die in der Entladungskammer (5) einen Elektrodenabstand Eₐ von 1,5 mm bis 3,0 mm besitzen, und mit wenigstens einem Quecksilberanteil an einer Füllung in der Entladungskammer (5), der die Füllungsdichte bestimmt,
**dadurch gekennzeichnet, dass**
- die Füllung in der Entladungskammer (5), die beim Betrieb der Lampe (1) in einem Gasentladungszustand ist, eine Füllungsdichte von 80 bis 90 mg/cm³ besitzt und die Gasentladungslampe (1) eine Brennspannung zwischen den Elektroden (3, 4) in der Entladungskammer (5) beim Betrieb der Lampe (1) von 80 bis 90 V hat
- und die Lampe zum Betrieb bei einer Leistung von 50 bis 70 W vorgesehen ist.

2. Gasentladungslampe (1) nach Anspruch 1,
**dadurch gekennzeichnet,**
**dass** die Entladungskammer (5) in Querrichtung des Kolbens (2) einen Innendurchmesser (B) von weniger als 4 mm besitzt.

3. Gasentladungslampe (1) nach Anspruch 1,
**dadurch gekennzeichnet,**
**dass** die Entladungskammer (5) auf der Oberfläche einen Wandladungsfaktor von mindestens 25 W/cm² besitzt.

4. Gasentladungslampe (1) nach Anspruch 1,
**dadurch gekennzeichnet,**
**dass** die Entladungskammer (5) eine Breite (A) von weniger als 8 mm und eine Länge (C) von weniger als 8 mm besitzt.

5. Gasentladungslampe (1) nach Anspruch 1,
**dadurch gekennzeichnet,**
**dass** die Füllung der Entladungskammer (5) wenigstens Quecksilber und ein Edelgas, vorzugsweise Xenon, enthält.

6. Gasentladungslampe (1) nach Anspruch 1,
**dadurch gekennzeichnet,**
**dass** die Füllung der Entladungskammer (5) wenigstens Quecksilber, ein Edelgas, vorzugsweise Xenon, und ein Metallhalogenid enthält.

7. Beleuchtungssystem, insbesondere für Kraftfahrzeuge, mit wenigstens einer Lichtquelle (1), wenigstens einem Lichteinkoppelungssystem (10), wenigstens einem Lichtleiter (13) und wenigstens einem Lichtauskoppelungssystem (14, 15, 16), wobei die Lichtquelle (1) eine Gasentladungslampe nach einem der Ansprüche 1-6 ist.

## Claims

1. A gas discharge lamp (1)
- with a bulb (2) made of quartz glass and comprising an ellipsoidal discharge chamber (5) in a central position, which chamber has a surface area with a maximum value of less than 2.5 cm²,
- with two electrodes (3, 4) extending into the discharge chamber (5) and having an electrode interspacing Eₐ of 1.5 mm to 3.0 mm inside the discharge chamber (5), and with at least a mercury component in a filling inside the discharge chamber (5) which determines the filling density,
**characterized in that**
- the filling in the discharge chamber (5), which filling is in a gas discharge state during operation of the lamp (1), has a filling density of 80 to 90 mg/cm³, and the gas discharge lamp (1) has an operating voltage between the electrodes (3, 4) in the discharge chamber (5) of 80 to 90 V during operation of the lamp (1),
- and the lamp is designed for operation with a power of 50 to 70 W.

2. A gas discharge lamp (1) as claimed in claim 1, **characterized in that** the discharge chamber (5) has an internal diameter (B) of less than 4 mm measured in transverse direction across the bulb (2).

3. A gas discharge lamp (1) as claimed in claim 1, **characterized in that** the discharge chamber (5) has a wall load factor on its surface of at least 25 W/cm².

4. A gas discharge lamp (1) as claimed in claim 1, **characterized in that** the discharge chamber (5) has a width (A) of less than 8 mm and a length (C) of less than 8 mm.

5. A gas discharge lamp (1) as claimed in claim 1, **characterized in that** the filling of the discharge chamber (5) comprises at least mercury and a rare gas, preferably xenon.

6. A gas discharge lamp (1) as claimed in claim 1, **characterized in that** the filling of the discharge chamber (5) comprises at least mercury, a rare gas, preferably xenon, and a metal halide.

7. A lighting system, in particular for motor vehicles, with at least one light source (1), at least one light coupling system (10), at least one optical waveguide (13), and at least one light delivery system (14, 15, 16), wherein the light source (1) is a gas discharge lamp as claimed in any one of the claims 1 to 6.

## Revendications

1. Lampe à décharge au gaz (1)
- avec une ampoule (2) en verre de quartz qui présente dans une position centrale un compartiment de décharge (5) de forme ellipsoïdale, qui possède une surface d'une valeur maximale de moins de 2,5 cm²,
- avec deux électrodes (3, 4) s'étendant dans le compartiment de décharge (5) qui possèdent dans le compartiment de décharge (5) un intervalle entre les électrodes Eₐ de 1,5 à 3,0 mm et avec au moins une proportion de mercure dans une charge dans le compartiment de décharge (5) qui détermine la densité de charge,
**caractérisée en ce que**
- la charge dans le compartiment de décharge (5) qui se trouve dans un état de décharge du gaz dans la lampe (1) en service et une densité de charge de 80 à 90 mg/cm³ et avec une tension de maintien entre les électrodes (3, 4) dans le compartiment de décharge (5) de 80 à 90 V dans la lampe (1) en service;
et que la lampe selon l'invention est prévue pour un fonctionnement à une puissance de 50-70 W.

2. Lampe à décharge au gaz (1) selon la revendication 1,
**caractérisée en ce**
**que** le compartiment de décharge (5) possède en direction transversale de l'ampoule (2) un diamètre interne (B) de moins de 4 mm.

3. Lampe à décharge au gaz (1) selon la revendication 1,
**caractérisée en ce**
**que** le compartiment de décharge (5) possède sur la surface un facteur de charge de paroi d'au moins 25 W/cm².

4. Lampe à décharge au gaz (1) selon la revendication 1,
**caractérisée en ce que** le compartiment de décharge (5) possède une largeur (A) de moins de 8 mm et une longueur (C) de moins de 8 mm.

5. Lampe à décharge au gaz (1) selon la revendication 1,
**caractérisée en ce**
**que** la charge du compartiment de décharge (5) contient au moins du mercure et un gaz noble, de préférence le xénon.

6. Lampe à décharge au gaz (1) selon la revendication 1,
**caractérisée en ce**
**que** la charge du compartiment de décharge (5) contient au moins du mercure, un gaz noble, de préférence le xénon, et un halogénure métallique.

7. Système d'éclairage, en particulier pour véhicules automobiles, avec au moins une source de lumière (1), au moins un système d'injection de lumière (10), au moins un guide de lumière (13) et au moins un système de projection de la lumière (14, 15,16), la source de lumière étant une lampe à décharge au gaz selon l'une des revendications 1 à 6.
